# EUROPEAN PATENT SPECIFICATION

(11) **EP 4 051 031 B1**
(45) Date of publication and mention of the grant of the patent: **02.07.2025**
(21) Application number: 21894996.4
(22) Date of filing: 10.11.2021
(51) Int. Cl.: A24F 40/46, A24F 40/50, A24F 40/51, A24F 40/485, A24F 40/57, H05B 47/11, H05B 47/105, H05B 1/02

(54) **AEROSOL GENERATING APPARATUS AND METHOD FOR CONTROLLING THE SAME**
AEROSOLERZEUGUNGSVORRICHTUNG UND VERFAHREN ZU IHRER STEUERUNG
APPAREIL DE GÉNÉRATION D'AÉROSOL ET SON PROCÉDÉ DE COMMANDE

(30) Priority: 18.11.2020 KR 20200154549
(43) Date of publication of application: 07.09.2022
(73) Proprietor: KT&G Corporation, Daedeok-gu Daejeon 34337 (KR)
(72) Inventor: LEE, Won Kyeong, Guri-si, Gyeonggi-do 11920 (KR); JEONG, Heon Jun, Seoul 05360 (KR); KIM, Dong Sung, Seoul 06310 (KR); CHOI, Jae Sung, Seongnam-si, Gyeonggi-do 13589 (KR); SUNWOO, Paul Joon, Seoul 06999 (KR)
(74) Representative: Ter Meer Steinmeister & Partner
(86) International application number: PCT/KR2021/016352
(87) International publication number: WO 2022/108225

(56) References cited:
- WO-A1-2016/184783
- WO-A1-2019/138055
- KR-A- 20190 051 785
- KR-A- 20200 092 936
- KR-A- 20200 106 901
- KR-A- 20200 106 928

## Description

### Technical Field

One or more embodiments of the present disclosure relate to an aerosol-generating apparatus and a method of controlling the same, and more particularly, to an aerosol-generating apparatus for generating an aerosol by heating an aerosol-generating material through Surface Plasmon Resonance (SPR) using an external light source and an internal light source, and a method of controlling the aerosol-generating apparatus.

### Background Art

Recently, the demand for alternative methods to overcome the disadvantages of traditional cigarettes has increased. For example, there is growing demand for an aerosol generating device that generates an aerosol by heating or atomizing an aerosol generating material in a cigarette or a cartridge, instead of combusting a cigarette. WO 2019/138055 A1 relates to an aerosol-generating device for heating an aerosol-forming substrate, the aerosol- generating device comprising: a heating element arranged to heat an aerosol-forming substrate when the aerosol- forming substrate is received by the aerosol-generating device, wherein the heating element comprises a plurality of metallic nanoparticles arranged to receive light from a light source and generate heat by surface plasmon resonance.

### Disclosure of Invention

### Technical Problem

Among various methods of generating aerosols, a method of generating an aerosol by using light from a light source has been recently suggested.

An aerosol-generating apparatus using light emitted from a light source may heat an aerosol-generating material by using, for example, a Surface Plasmon Resonance (SPR) technique, and thus, may generate an aerosol.

The SPR technique is a method of heating metals through vibrations of metal nanoparticles. In detail, free electrons in metal nanoparticles collectively vibrate because of an external stimulus (e.g., incident light), and as a result, the free electrons are polarized and metals are heated.

In general, an aerosol-generating apparatus using an existing SPR technique may heat an aerosol-generating material by using light emitted from an internal light source of the aerosol-generating apparatus or concentrating an external light source of the aerosol-generating apparatus.

However, when an aerosol-generating material is heated using an internal light source, a greater amount of power is consumed than using an external light source, and thus, the operation time of the aerosol-generating apparatus shortens.

Also, when an aerosol-generating material is heated using an external light source, the heating performance differs according to an incident location of external light, an angle of external light, or surrounding environments, and thus, the aerosol-generating performance is not consistent.

The technical problems of the present disclosure are not limited to the above-described description, and other technical problems may be clearly understood by one of ordinary skill in the art from the embodiments to be described hereinafter.

### Solution to Problem

To overcome the above limitations, one or more embodiments of the present disclosure provide an aerosol-generating apparatus capable of improving the aerosol-generating efficiency with low power. The aerosol-generating apparatus may use both an external source and an internal light source, and compensate for the lack of light received by metal nanoparticles by driving the internal light source according to a change in the external light source.

According to an aspect of the present disclosure, an aerosol-generating apparatus includes a housing comprising at least one light-transmitting window configured to transmit external light to an inside of the aerosol-generating apparatus; a heating element comprising a plurality of nanoparticles configured to generate heat in response to light through Surface Plasmon Resonance (SPR); a light source arranged inside the housing and configured to emit light toward the heating element; a sensor configured to detect a quantity of the external light transmitted to the inside of the aerosol-generating apparatus through the at least one light-transmitting window; and a processor configured to adjust a quantity of light received by the heating element by controlling the light source based on the detected quantity of the external light transmitted to the inside of the aerosol-generating apparatus.

According to an aspect of the present disclosure, a method of controlling an aerosol-generating apparatus includes detecting a quantity of external light transmitted to an inside of the aerosol-generating apparatus, wherein the heating element is configured to generate heat in response to light through Surface Plasmon Resonance (SPR); and supplementing a quantity of light received by the heating element, by controlling a light source arranged inside the aerosol-generating apparatus based on the detected quantity of the external light.

### Advantageous Effects of Invention

According to one or more embodiments, an aerosol-generating apparatus may compensate for a lack of light received by metal nanoparticles by controlling the operation of an internal light source. Thus, an aerosol-generating apparatus may provide a user with a uniform amount of aerosols regardless of the quantity of external light transmitted to the inside of the aerosol-generating apparatus.

Also, the aerosol-generating apparatus may generate an aerosol by using both an external light source and the internal light source. Thus, an aerosol-generating apparatus may provide the user with a sufficient amount of atomization with lower power than an apparatus which only uses an internal light source to generate an aerosol.

However, effects of the present disclosure are not limited to the above effects, and effects that are not mentioned could be clearly understood by one of ordinary skill in the art from the present specification and the attached drawings.

### Brief Description of Drawings

FIG. 1 is a perspective view of an aerosol-generating apparatus according to an embodiment.
FIG. 2 is a perspective view illustrating a state in which a cover member of the aerosol-generating apparatus of FIG. 1 moves from a first position to a second position.
FIG. 3A is a longitudinal cross-sectional view of an aerosol-generating apparatus according to an embodiment.
FIG. 3B is a longitudinal cross-sectional view of an aerosol-generating apparatus according to another embodiment.
FIG. 4A is a diagram of a heating element of an aerosol-generating apparatus, according to an embodiment.
FIG. 4B is a diagram of a heating element of an aerosol-generating apparatus, according to another embodiment.
FIG. 5 is a block diagram of components of an aerosol-generating apparatus according to an embodiment.
FIG. 6 is a diagram for explaining an electronic circuit of a sensor included in an aerosol-generating apparatus, according to an embodiment.
FIG. 7 is a flowchart for explaining operations of controlling an aerosol-generating apparatus, according to an embodiment.
FIG. 8 is a flowchart for explaining operations of controlling an aerosol-generating apparatus, according to an embodiment.
FIG. 9 is a graph showing an operation of compensating for the lack of light received by a heating element of an aerosol-generating apparatus, according to an embodiment.
FIG. 10 is a flowchart for explaining operations of controlling an aerosol-generating apparatus, according to another embodiment.

### Mode for the Invention

With respect to the terms used to describe the various embodiments, general terms which are currently and widely used are selected in consideration of functions of structural elements in the various embodiments of the present disclosure. However, meanings of the terms can be changed according to intention, a judicial precedence, the appearance of new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and/or operation and can be implemented by hardware components or software components and combinations thereof.

Hereinafter, the present disclosure will now be described more fully with reference to the accompanying drawings, in which exemplary embodiments of the present disclosure are shown such that one of ordinary skill in the art may easily work the present disclosure. The disclosure can, however, be embodied in many different forms and should not be construed as being limited to the embodiments set forth herein.

The terms "embodiment" or "embodiments" described in the specification are intended for explaining invention clearly. Therefore, embodiments should not be construed to be exclusive to each other. For example, elements explained in relating to an embodiment may be embodied and applied in many different forms within the scope of the specification.

In addition, terms used in the present specification are for describing the embodiments and are not intended to limit the embodiments. In the present specification, the singular form also includes the plurality form unless specifically stated in the phrase.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Throughout the specification, a "lengthwise direction" of a component may be a direction in which the component extends along a longitudinal axis of the component, and in this case, the longitudinal axis of the component may denote a direction in which the component extends further than in other axis direction crossing the longitudinal direction.

Hereinafter, one or more embodiments of the present disclosure will be described in detail with reference to the attached drawings.

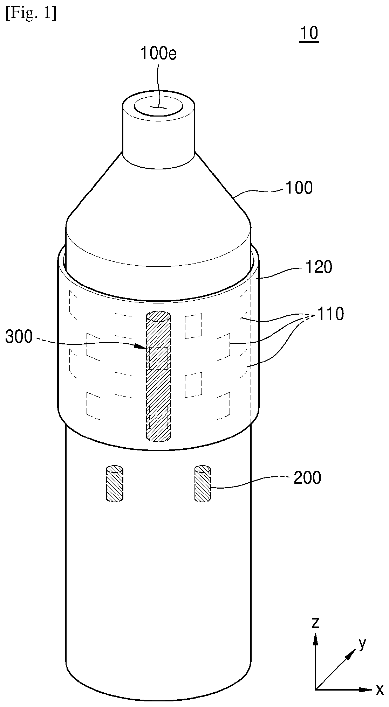

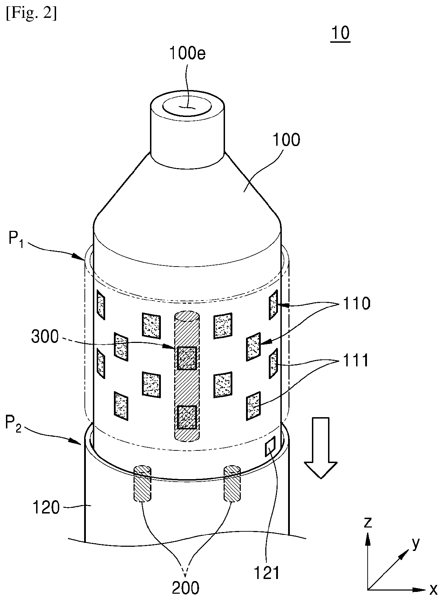

FIG. 1 is a perspective view of an aerosol-generating apparatus according to an embodiment. FIG. 2 is a perspective view illustrating a state in which a cover member of the aerosol-generating apparatus of FIG. 1 moves from a first position to a second position.

Referring to FIGS. 1 and 2, an aerosol-generating apparatus 10 includes a housing 100 which transmits external light of the aerosol-generating apparatus 10 to the inside thereof, a light source 200 which is disposed inside the housing 100 and emits light, and a heating element 300 which generates heat by receiving the external light and/or the light emitted from the light source 200 and heats an aerosol-generating material by using the generated heat.

The housing 100 may form an exterior of the aerosol-generating apparatus 10 and may include at least one light-transmitting window 110 (or "transmission window") for transmitting the external light of the aerosol-generating apparatus 10 to the inside of the housing 100.

In an embodiment, the at least one transmitting window 110 may be formed on at least a portion of an outer circumferential surface of the housing 100 and may transmit, to an internal space of the housing 100, sunlight and visible rays emitted to the aerosol-generating apparatus 10 or light emitted from an external light source. At least part of the external light, which is transmitted to the internal space of the housing 100 through at least one light-transmitting window 110, may reach the heating element 300 and may generate heat in the heating element 300. Detailed descriptions thereof are provided below.

For example, one or more light-transmitting windows 110 may be arranged on the outer circumferential surface of the housing 100 with predetermined intervals, but an arrangement of the light-transmitting window 110 is not limited thereto.

In another embodiment, the at least one light-transmitting window 110 may include a lens unit 111 so that the external light transmitted to the inside of the housing 100 may be concentrated. For example, the lens unit 111 may include a convex lens and may concentrate the external light on the heating unit 300 arranged in the internal space of the housing 100.

In the internal space of the housing 100, components (e.g., the light source 200 and/ or the heating element 300) for heating an aerosol-generating material as well as components (e.g., a processor, a memory, a battery, etc.) for operating the aerosol-generating apparatus 10 may be arranged.

For example, the processor may control overall operation of the aerosol-generating apparatus 10, the memory may store data required to operate the aerosol-generating apparatus 10, and the battery may supply power to the components of the aerosol-generating apparatus 10. These components are described below in detail.

The light source 200 (or an "internal light source") may be arranged in the internal space of the housing 100 and may emit light when power is supplied. The light source 200 may emit light towards the heating element 300, and the heating element 300 may be heated by receiving the light from the light source 200.

The light from the light source 200 may be, for example, light having a wavelength ( λ) ranging from about 380 nm to about 780 nm or from about 400 nm to about 750 nm.

The light source 200 may be, for example, at least one of an arc lamp, a halogen lamp, a metal halide lamp, a mercury lamp, a fluorescent lamp, laser, and a light-emitting diode (LED). However, the light source 200 is not limited thereto.

FIG. 1 and FIG. 2 only illustrate an embodiment in which two light sources 200 are arranged in the internal space of the housing 100. However, the number of light sources 200 arranged in the internal space of the housing 100 is not limited to the illustrated embodiment. In another embodiment, one light source 200 or at least three light sources 200 may be arranged in the internal space of the housing 100.

The heating element 300 may be arranged in the internal space of the housing 100 and may heat the aerosol-generating material by using the external light, which is transmitted to and/or is concentrated in the internal space of the housing 100 through at least one light-transmitting window 110, thereby generating an aerosol.

For example, the heating element 300 may generate the aerosol by heating an aerosol-generating material. The aerosol-generating material may be arranged in the heating element 300 or may be arranged in such a way that at least some portions of the aerosol-generating material are surrounded by the heating element 300. Detailed descriptions thereof are provided below.

The heating element 300 may include metal nanoparticles that generate heat through Surface Plasmon Resonance (SPR) by receiving the light, and may heat the aerosol-generating material through the SPR. For example, the metal nanoparticles may be arranged on at least one surface of the heating element 300 and may generate heat by incident light, but embodiments are not limited thereto.

When metal particles are between 1 and 100 nanometers (nm) in diameter, the SPR may occur because of a behavior of free electrons of metal. The term "surface plasmon resonance" indicates a phenomenon in which, when light is incident on surfaces of metal nanoparticles that are conductors, free electrons on a metal surface collectively vibrate because of resonance with an electromagnetic field of certain energy of light.

When the external light from the outside of the aerosol-generating apparatus 10 is transmitted to or concentrated on the heating element 300, or when the light from the light source 200 is incident on the heating element 300, free electrons of the metal nanoparticles on the surface of the heating element 300 may collectively vibrate through the SPR.

As a result, the free electrons of the metal nanoparticles of the heating element 300 may be polarized, and the metal nanoparticles of the heating element 300 may be heated. Because a surface temperature of the heating element 300 may increase as the metal nanoparticles on the surface of the heating element 300 are heated, the heating element 300 may function as a heater or an atomizer that generates an aerosol by heating the aerosol-generating material.

In another embodiment, the heating element 300 may include various types of metal nanoparticles that vibrate and heats by light with different wavelengths. For example, the heating element 300 may include a first metal nanoparticle which may vibrate and heat by light with a first wavelength, and a second metal nanoparticle which may vibrate and heat by light with a second wavelength.

The aerosol generated inside the housing 100 by the heating element 300 may be discharged to the outside of the aerosol-generating apparatus 10 through a discharge path 100e formed at an end in a lengthwise direction (e.g., +z direction in FIGS. 1 and 2) of the housing 100. In the present specification, the expression "the lengthwise direction of the housing" may indicate a direction substantially parallel to the z axis of FIGS. 1 and 2.

A user may touch an end of the housing 100 with an oral portion of the user and may inhale the aerosol discharged through the discharge path 100e. In this case, the end of the housing 100 touching the oral portion of the user may function as a mouthpiece, and the end of the housing 100 may have a shape of which at least a portion is curved for easy contact with the oral portion of the user. However, one or more embodiments are not limited thereto.

The aerosol-generating apparatus 10 may include a cover member 120 which is movably coupled to the housing 100 and surrounds at least a portion of the outer circumferential surface of the housing 100. The aerosol-generating apparatus 10 may further include a movement detection sensor 121, which may detect a movement of the cover member 120.

The cover member 120 may move in the lengthwise direction of the housing 100. As the cover member 120 moves in the lengthwise direction of the housing 100, the at least one light-transmitting window 110, which is formed on the outer circumferential surface of the housing 100, may be covered by the cover member 120 or exposed to the outside of the aerosol-generating apparatus 10.

Referring to FIGS. 1 and 2, when the cover member 120 is at a first position P1 with respect to the housing 100, the at least one light-transmitting window 110 may be covered by the cover member 120 and not be exposed to the outside of the aerosol-generating apparatus 10. As a result, the cover member 120 may prevent the transmission of the external light to the internal space of the housing 100.

As illustrated in FIG. 2, on the contrary, as the cover member 120 moves from the first position P1 to a second position P2, the at least one light-transmitting window 110 may be exposed to the outside of the aerosol-generating apparatus 10. Accordingly, the external light of the aerosol-generating apparatus 10 may be transmitted to the internal space of the housing 100 and may be received by the heating element 300.

In other words, in the aerosol-generating apparatus 10, the at least one light-transmitting window 110 may be covered by the cover member 120 as the cover member 120 is at the first position P1, or the at least one light-transmitting window 110 may be exposed to the outside of the aerosol-generating apparatus 10 as the cover member 120 is at the second position P2.

The movement detection sensor 121 may detect a movement of the cover member 120 from the first position P1 to the second position P2 or from the second position P2 to the first position P1. For example, the movement detection sensor 121 may be a hall effect sensor, but types of the movement detection sensor 121 capable of detecting movements of the cover member 120 are not limited to the above example.

Information regarding the movement of the cover member 120 detected by the movement detection sensor 121 may be transmitted to the processor, and the processor may control the operation of the aerosol-generating apparatus 10 based on the information from the movement detection sensor 121. Detailed descriptions thereof are provided below.

In an embodiment, the movement detection sensor 121 may be positioned in a movement path of the cover member 120 on the outer circumferential surface of the housing 100, but the position is not limited thereto. In another embodiment, the movement detection sensor 121 may be arranged in the internal space of the housing 100 or in at least one portion of the cover member 120 that faces the housing 100.

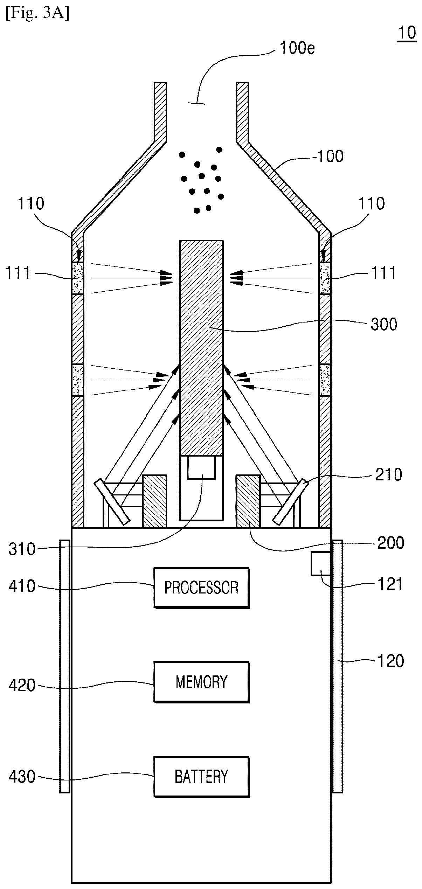

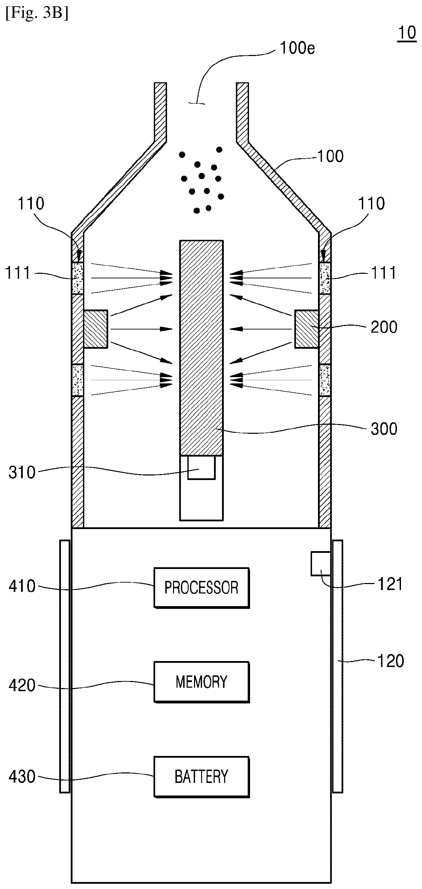

FIG. 3A is a longitudinal cross-sectional view of an aerosol-generating apparatus according to an embodiment. FIG. 3B is a longitudinal cross-sectional view of an aerosol-generating apparatus according to another embodiment. FIG. 3A and FIG. 3B illustrate a cross-section obtained by cutting the aerosol-generating apparatus 10 along a longitudinal direction in a state in which the cover member 120 is at the second position (e.g., the second position P2 of FIG. 2).

Referring to FIGS. 3A and 3B, the aerosol-generating apparatus 10 may include the housing 100, at least one light-transmitting window 110, the cover member 120, the movement detection sensor 121, the light source 200, the heating element 300, a sensor 310, a processor 410, a memory 420, and a battery 430.

Some components of the aerosol-generating apparatus 10 have been described above with respect to FIGS. 1 and 2, and the descriptions already provided are not repeated.

The heating element 300 may be arranged in the internal space of the housing 100 and may include the metal nanoparticles that generate heat through the SPR by receiving the light. As the heat is generated in the metal nanoparticles of the heating element through the SPR, the temperature of the heating element 300 may also increase, and the heating element 300 may generate the aerosol by heating the aerosol-generating material accordingly. The process of generating an aerosol is described below in detail.

While the cover member 120 is at the second position P2, the heating element 300 may receive the external light, which is transmitted to the internal space of the housing 100 through the at least one light-transmitting window 110 formed on the outer circumferential surface of the housing 100. As a result, the heating element 300 may generate heat by the received external light, and may heat the aerosol-generating material.

In an embodiment, the at least one light-transmitting window 110 may include the lens unit 111, and the lens unit 111 may concentrate the light incident the least one light-transmitting window 110 onto the heating element 300. As a result, the quantity of external light received by the heating element 300 may increase, and thus the atomization performance of the heating element 300 may be improved.

The heating element 300 may light from the light source 200 arranged in the internal space of the housing 100 as well as the external light. The heating element 300 may heat the aerosol-generating material by generating heat by the light from the light source 200.

In an embodiment, referring to FIG. 3A, the light source 200 may be spaced apart from the heating element 300 by a certain distance, and the light from the light source 200 may be reflected from a reflection mirror 210 adjacent to the light source 200, and may be incident on the heating element 300. For example, the reflection mirror 210 may be arranged to form a certain angle with respect to the lengthwise direction of the heating element 300 so that the light from the light source 200 is incident on a reflection surface of the reflection mirror 210 and then proceeds towards the heating element 300. However, one or more embodiments are not limited thereto.

In another embodiment, referring to FIG. 3B, the light source 200 may be arranged in a region adjacent to the heating element 300, and accordingly, the light from the light source 200 may be directly incident on the heating element 300 without reflecting from a separate reflection mirror (e.g., the reflection mirror 210 of FIG. 3A).

The aerosol-generating apparatus 10 may generate the aerosol by using the heating element 300, of which the temperature increases through the SPR by external light and/or internal light. The external light may be transmitted to the internal space of the housing 100 through the at least one light-transmitting window 110, and the internal light may be received from the light source 200. The generated aerosol may be discharged to the outside of the aerosol-generating apparatus 10 through the discharge path 100e which provide fluid communication between the internal space of the housing 100 and the outside of the aerosol-generating apparatus 10, so that the aerosol is provided to the user.

That is, the aerosol-generating apparatus 10 may heat the aerosol-generating material by using the light source 200 arranged inside the housing 100 and the external light received from the outside of the aerosol-generating apparatus 10. Thereby, the aerosol-generating apparatus 10 may provide the aerosol to the user with less power than when the light from the light source 200 is only used to heat the aerosol-generating material.

The sensor 310 may measure the quantity of external light, which is transmitted from the outside of the aerosol-generating apparatus 10 towards the heating element 300 inside the housing 100 through the at least one light-transmitting window 110, and/or the temperature of the heating element 300.

For example, the sensor 310 may include at least one of a temperature sensor for measuring the temperature of the heating element 300 and a light-quantity measurement sensor for measuring the quantity of external light. However, one or more embodiments are not limited thereto. According to embodiments, the light-quantity measurement sensor may measure the quantity of external light that is incident on the at least one light-transmitting window 110, or the quantity of external light that is incident on the heating element 300.

In an embodiment, the sensor 310 may be electrically or operatively connected to the processor 410 and may transmit or send, to the processor 410, information regarding the detected quantity of external light, which is incident on the heating element 300 from the outside of the aerosol-generating apparatus 10, and/or information regarding the temperature of the heating element 300.

In the present specification, the expression "operatively connected" may indicate a state in which the components are connected to each other to exchange signals through wired or wireless communication. For example, optical signals and/or magnetic signals may be exchanged between components which are operatively connected to each other.

In the internal space of the housing 100 of the aerosol-generating apparatus 10, the processor 410, the memory 420, and the battery 430 may be arranged.

The processor 410 is hardware that controls overall operation of the aerosol-generating apparatus 10. In an embodiment, the processor 410 may be electrically or operatively connected to the light source 200 and may turn on or off the light source 200.

In another embodiment, the processor 410 may be electrically or operatively connected to the sensor 310 and/or the movement detection sensor 121. The processor 410 may control the operation of the aerosol-generating apparatus 10 based on information from the sensor 310 and/or the movement detection sensor 121.

For example, the processor 410 may control light emitted onto the heating element 300 from the light source 200 by controlling a power state of the light source 200 and the quantity of light from the light source 200, based on the information from the sensor 310 and/or the movement detection sensor 121.

According to an embodiment, the processor 410 may include a plurality of processors 410. The processor 410 may be embodied with an array of logic gates. The processor 410 may be embodied with a combination of a general-purpose microprocessor 410 and a memory in which a program executable by the microprocessor 410 is stored. Also, the processor 410 may be embodied with another type of hardware.

The memory 420 may be electrically connected to the processor 410, and data used to operate the aerosol-generating apparatus 10 may be stored in the memory 420. For example, in the memory 420, data regarding a temperature profile of the heating element 300 for improving the atomization performance and/or a light profile associated with the quantity of light received by the heating element 300 may be stored. In an embodiment, the processor 410 may control the operation of the light source 200 based on the data stored in the memory 420, and detailed descriptions thereof are provided below.

The battery 430 may supply power used to operate the aerosol-generating apparatus 10. The battery 430 may be electrically connected to the light source 200 and supply power thereto. Also, the battery 430 may supply power necessary for operations of other hardware components included in the aerosol-generating apparatus 10. The battery 430 may be a rechargeable battery 430 or a disposable battery 430. For example, the battery 430 may be a lithium polymer (LiPoly) battery 430, but is not limited thereto.

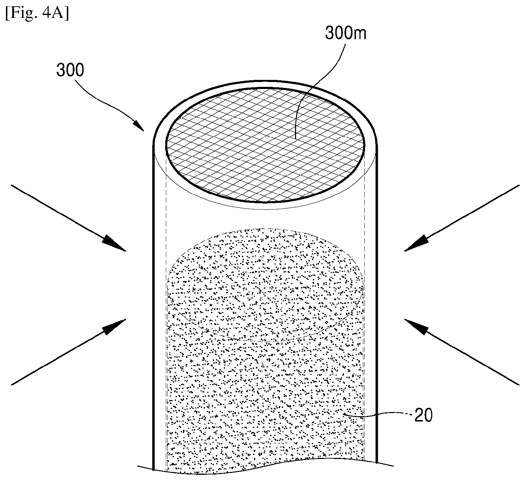

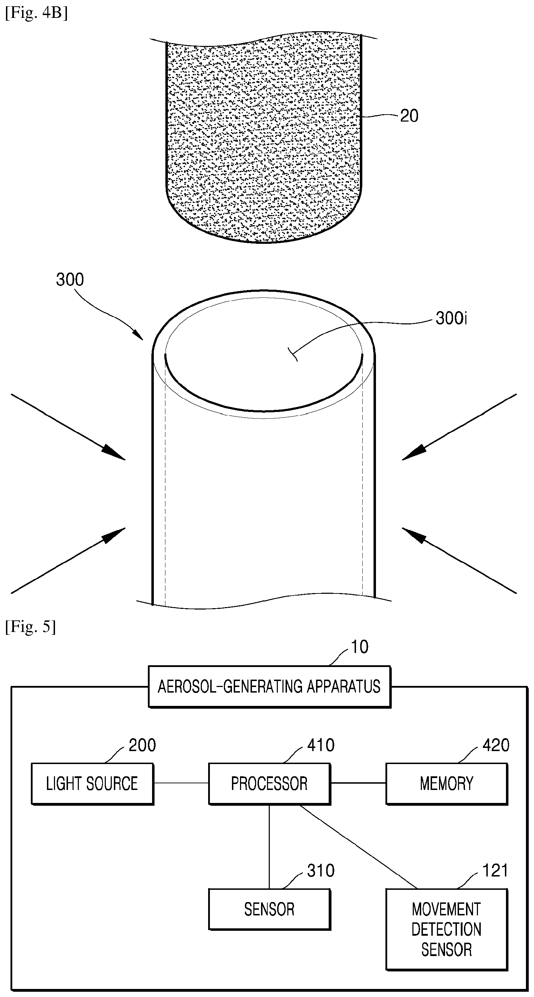

FIG. 4A is a diagram of a heating element of an aerosol-generating apparatus, according to an embodiment. FIG. 4B is a diagram of a heating element of an aerosol-generating apparatus, according to another embodiment.

FIG. 4A and FIG. 4B illustrate the heating element 300 applicable to the aerosol-generating apparatus 10 of FIGS. 1, 2, 3A and/or 3B, and the repeated descriptions thereof are omitted.

Referring to FIG. 4A, the heating element 300 of the aerosol-generating apparatus may generate an aerosol by heating an aerosol-generating material 20 included in the heating element 300.

In an embodiment, the heating element 300 may be hollow, and the aerosol-generating material 20 may be included in the internal space of the heating element 300. For example, in the internal space of the heating element 300, the aerosol-generating material 20 in a solid state or a liquid state may be arranged.

The aerosol-generating material 20 may include at least one of nicotine, propylene glycol (PG), and glycerin or a blend thereof. Nicotine may be nicotine included in a tobacco material obtained by molding or reconstituting tobacco leaves. Also, nicotine may be naturally generated nicotine or synthetic nicotine. For example, nicotine may include free base nicotine, nicotine salts, or any combination thereof.

The aerosol-generating material 20 may include nicotine or nicotine salts. Nicotine salts may be formed by adding suitable acids, including organic or inorganic acids, to nicotine. Nicotine may be naturally generated nicotine or synthetic nicotine and may have any suitable weight concentration relative to the total weight of the aerosol-generating material 20.

Acid for the formation of the nicotine salts may be appropriately selected in consideration of the rate of nicotine absorption in the blood, the operating temperature of the aerosol-generating apparatus, the flavor or savor, the solubility, or the like. For example, the acid for the formation of nicotine salts may be a single acid selected from the group consisting of benzoic acid, lactic acid, salicylic acid, lauric acid, sorbic acid, levulinic acid, pyruvic acid, formic acid, acetic acid, propionic acid, butyric acid, valeric acid, caproic acid, caprylic acid, capric acid, citric acid, myristic acid, palmitic acid, stearic acid, oleic acid, linoleic acid, linolenic acid, phenylacetic acid, tartaric acid, succinic acid, fumaric acid, gluconic acid, saccharic acid, malonic acid or malic acid, or a mixture of two or more acids selected from the group, but is not limited thereto.

Propylene glycol and glycerin included in the aerosol-generating material 20 are aerosol forming substances. When propylene glycol and glycerin are atomized, an aerosol may be generated. For example, the aerosol-generating material 20 may include a glycerin and propylene glycol solution to which nicotine is added, and the weight ratio between glycerin and propylene glycol may vary according to embodiments.

Also, the aerosol-generating material 20 may include any one component of water, solvents, ethanol, plant extracts, spices, flavorings, and vitamin mixtures, or a mixture of these components. The spices may include menthol, peppermint, spearmint oil, and various fruit-flavored ingredients, but are not limited thereto.

The flavorings may include ingredients capable of providing various flavors or tastes to a user. Vitamin mixtures can be a mixture of at least one of vitamin A, vitamin B, vitamin C, and vitamin E, but are not limited thereto.

As the external light, which is incident on the heating element 300 from the outside of the aerosol-generating apparatus, or the light emitted from the light source (e.g., the light source 200 of FIG. 3A or 3B) is received by the heating element 300, the temperature of the heating element 300 may increase according to the SPR.

Accordingly, the aerosol-generating material 20 arranged in the internal space of the heating element 300 may be heated by the heating element 300 and vaporized. As a result, the aerosol may be generated in the internal space of the heating element 300. The aerosol, which is generated in the internal space of the heating element 300, may be discharged to the outside of the heating element 300 through a mesh portion 300m formed in at least one region of the heating element 300, and the aerosol discharged to the outside may be provided to the user through a discharge path (e.g., the discharge path 100e of FIG. 3A or 3B).

The mesh portion 300m may be formed, for example, at an end portion of the heating element 300 which is adjacent to the discharge path, but a location of the mesh portion 300m is not limited thereto. For example, the mesh portion 300m may be formed on a side surface of the heating element 300.

In an embodiment, the heating element 300 including the aerosol-generating material 20 may be detachably coupled to the housing 100 of the aerosol-generating apparatus, so that the user may replace the heating element 300 when the aerosol-generating material 20 inside the heating element 300 is consumed.

Referring to FIG. 4B, the aerosol-generating material 20 may be a separate consumable, which may be inserted into the heating element 300 and heated to generate an aerosol. For example, the aerosol-generating material 20 may be provided in the form of a cigarette (i.e., a cigarette-type aerosol-generating material), but is not limited thereto.

In an embodiment, the heating element 300 may include an insertion hole 300i for accommodating at least a portion of the aerosol-generating material 20, and at least a portion of the aerosol-generating material 20 inserted into the insertion hole 300i may be surrounded by the heating element 300.

As the external light, which is incident on the heating element 300 from the outside of the aerosol-generating apparatus, or the light emitted from the light source is received by the heating element 300, the temperature of the heating element 300 may increase according to the SPR.

As a result, the aerosol-generating material 20 may be heated by the heating element 300, thereby generating the aerosol. The generated aerosol may be discharged to the outside of the aerosol-generating apparatus through the discharge path, and the user may inhale the discharged aerosol.

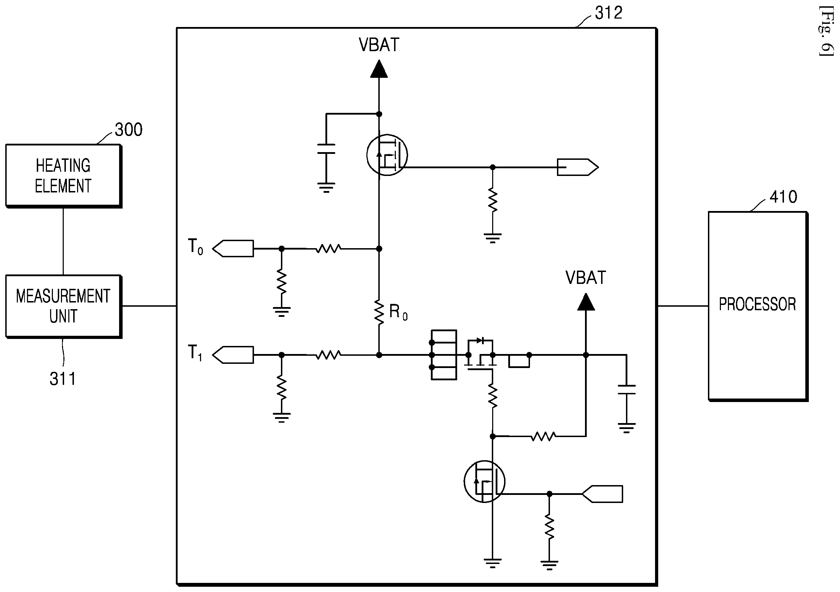

FIG. 5 is a block diagram of components of an aerosol-generating apparatus according to an embodiment. FIG. 6 is a diagram for explaining an electronic circuit of a sensor included in an aerosol-generating apparatus, according to an embodiment.

Referring to FIG. 5, the aerosol-generating apparatus 10 according to an embodiment may include the movement detection sensor 121, the light source 200, the sensor 310, the processor 410, and the memory 420. Some components of the aerosol-generating apparatus 10 have been described above with reference to FIGS. 1, 2, 3A and 3B, and thus repeated descriptions thereof are omitted.

The processor 410 may be electrically or operatively connected to the light source 200, which emits light towards the heating element (e.g., the heating element 300 of FIGS. 1 and 2), and may control the operation of the light source 200. For example, the processor 410 may turn on and off the light source 200 or may control the quantity of light emitted from the light source 200.

According to an embodiment, the processor 410 may be electrically connected to the sensor 310 and may control the operation of the light source 200 based on the information from the sensor 310. For example, the sensor 310 may detect the temperature of the heating element and/or the quantity of external light that is incident on the heating element from the outside of the aerosol-generating apparatus. The processor 410 may receive information regarding the temperature of the heating element and/or the information regarding the quantity of external light from the sensor 310, and control the operation of the light source 200 based on the information.

According to an embodiment, the sensor 310 may include a temperature sensor for measuring the temperature of the heating element. For example, the temperature sensor may be attached to at least a portion of the heating element and directly measures the temperature of the heating element. Alternatively, the temperature sensor may be separated from the heating element and indirectly measures the temperature of the heating element. However, the temperature sensor is not limited thereto.

Referring to FIG. 6, in another embodiment, the sensor 310 may include a measurement unit 311 that contacts at least a portion of the heating element 300, and an electronic circuit 312 that is electrically connected to the measurement unit 311 and the processor 410. The electronic circuit 312 may include at least one fixed resistor RO.

The measurement unit 311 may contact at least a portion of the heating element 300 of which the temperature increases by the external light or the light emitted from the light source 200. As the temperature of the heating element 300 changes, a resistance of the measurement unit 311 may also change.

As the measurement unit 311 contacts at least a portion of the heating element 300, the measurement unit 311 may include a material having a thermal contact resistance (TCR) characteristic to prevent the measurement unit 311 from being damaged by the increase in the temperature of the heating element 300. For example, the measurement unit 311 may include at least one of stainless steel (SUS), platinum, and titanium, but the material of the measurement unit 311 is not limited thereto.

The electronic circuit 312 may include at least one fixed resistor RO, and the at least one fixed resistor RO may be electrically connected to the measurement unit 311 through terminals (e.g., first terminal T0 and second terminal T1). For example, the first terminal T0 may be arranged between an end of the fixed resistor RO and an end of the measurement unit 311, and the second terminal T1 may be arranged between the other end of the fixed resistor RO and the other end of the measurement unit 311. Thus, the measurement unit 311 may be electrically connected to the fixed resistor RO. According to an embodiment, the fixed resistor RO may not be directly connected to the terminals, and other electronic elements may be arranged between the fixed resistor RO and the terminals.

The processor 410 may detect a resistance variation of the measurement unit 311 according to the temperature change of the heating element 300 based on a voltage between both ends of the fixed resistor RO and may detect the temperature of the heating element 300 based on the detected resistance variation of the measurement unit 311. The aerosol-generating apparatus 10 may accurately measure the temperature of the heating element 300 while minimizing power consumption of the battery 430 by using the measurement unit 311 and the electronic circuit 312 without a separate sensor.

In this case, a resistance value of the fixed resistor RO for detecting the resistance variation of the measurement unit 311 may be less than or equal to about 5 Ω. Preferably, the resistance value of the fixed resistor RO may range from about 4.5 Ω to about 5 Ω, but is not limited thereto.

According to an embodiment, the processor 410 may control the operation of the light source 200 based on the temperature of the heating element 300 that is detected by a temperature sensor and/or the measurement unit 311 and the electronic circuit 312, and thus may adjust or supplement the quantity of light received by the heating element 300.

The quantity of light which is incident on the heating element 300 from the outside of the aerosol-generating apparatus 10 may decrease because of a change in a surrounding environment (e.g., weather). In this case, the temperature of the heating element 300 may not increase to a desired temperature. As a result, the atomization performance of the heating element 300 may be degraded, or the aerosol may not be generated by the external light alone.

In this regard, the aerosol-generating apparatus 10 according to an embodiment may compare the measured temperature of the heating element 300 with a designated temperature profile. If the temperature of the heating element 300 fails to reach a designated temperature of the temperature profile at a certain time, the aerosol-generating apparatus 10 may compensate for the lack of light received by the heating element by operating the light source 200 or increasing the quantity of light emitted from the light source 200. As a result, the aerosol-generating apparatus 10 may maintain uniform atomization performance regardless of the change in the surrounding environment.

For example, the processor 410 of the aerosol-generating apparatus 10 may control the operation of the light source 200 by comparing designated temperature profile data stored in the memory 420 with the temperature of the heating element 300 that is measured by the sensor 310, but one or more embodiments are not limited thereto. As another example, the processor 410 may compare the designated temperature profile data stored in a memory of the processor 410 with the measured temperature of the heating element 300 and may control the operation of the light source 200 according to a comparison result.

In the present specification, the expression "designated temperature profile" indicates data that is associated with the temperature of the heating element 300 per unit time to secure the sufficient atomization amount and increase the aerosol-generating efficiency.

According to another embodiment, the sensor 310 may include a light-quantity measurement sensor for measuring the quantity of light that is incident on the heating element 300. For example, the light-quantity measurement sensor may include at least one of a light sensor and an illumination sensor, but is not limited thereto.

In an embodiment, the light-quantity measurement sensor may measure the quantity of external light that is incident on the heating element 300 from the outside of the aerosol-generating apparatus 10 through at least one light-transmitting window (e.g., the at least one light-transmitting window 110 of FIGS. 1 and 2).

The processor 410 may adjust or supplement the quantity of light received by the heating element 300, by controlling the operation of the light source 200 based on the quantity of external light that is measured by the light-quantity measurement sensor. Accordingly, the atomization performance of the aerosol-generating apparatus 10 may be uniformly maintained despite a change in the quantity of external light received by the heating element 300.

For example, the processor 410 may compare designated light profile data, which is stored in the memory 420, with the quantity of external light received by the heating element 300 as measured by the sensor 310. Then, the processor 410 may control the operation of the light source 200 according to a comparison result. However, one or more embodiments are not limited thereto. As another example, the processor 410 may compare designated light profile data, which is stored in the memory of the processor 410, with the measured quantity of external light that is received by the heating element 300. Then, the processor 410 may control the operation of the light source 200.

In the present specification, the expression "light profile" may indicate data regarding the quantity of light that has to be received by the heating element 300 per unit time to secure the sufficient atomization amount and increase the aerosol-generating efficiency.

According to an embodiment, the processor 410 may control the power of the aerosol-generating apparatus 10 based on a movement of a cover member (e.g., the cover member 120 of FIGS. 1 and 2).

The processor 410 may be electrically connected to the movement detection sensor 121 that may detect the movement of the cover member so that the processor 410 may receive, from the movement detection sensor 121, information regarding the movement of the cover member.

For example, when the cover member is at the first position (e.g., the first position P1 of FIG. 2) with respect to the housing of the aerosol-generating apparatus 10, at least one light-transmitting window may be covered by the cover member, and thus the external light may be prevented from being incident on the heating element 300 or reaching the inside of the aerosol-generating apparatus 10.

As another example, when the cover member moves from the first position to the second position (e.g., the second position P2 of FIG. 2), at least one light-transmitting window may be exposed to the outside of the aerosol-generating apparatus 10. As a result, the external light may be incident on the heating element 300, and the temperature of the heating element 300 may increase.

Accordingly, when the movement of the cover member from the first position to the second position is detected by the movement detection sensor 121, the processor 410 may control the aerosol-generating apparatus 10 to turn on. The expression "controlling the aerosol-generating apparatus 10 to turn on" indicates an operation that initiates a process of generating an aerosol by supplying electricity to each component, especially, a heating element or a light source.

On the contrary, when the movement of the cover member from the second position to the first position is detected by the movement detection sensor 121, the processor 410 may determine that the provision of the external light to the heating element 300 is blocked and may control the aerosol-generating apparatus 10 to turn off. The expression "controlling the aerosol-generating apparatus 10 to turn off" indicates an operation that terminates a process of generating an aerosol by stopping the supply of electricity to each component, especially, a heating element or a light source.

Accordingly, the user convenience of the aerosol-generating apparatus 10 may be improved because the power of the aerosol-generating apparatus 10 is controlled based on a movement of the cover member without a separate power manipulation of the user.

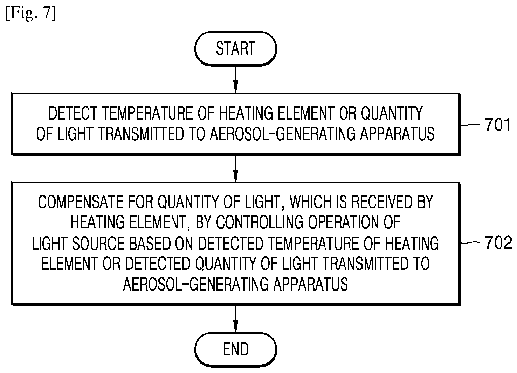

FIG. 7 is a flowchart for explaining operations of controlling an aerosol-generating apparatus, according to an embodiment.

FIG. 7 illustrates an operation of controlling the aerosol-generating apparatus 10 of FIGS. 1, 2, 3A, 3B, and/or 5. The operations of controlling the aerosol-generating apparatus are described below with reference to FIGS. 1, 2, 3A, 3B, and/or 5.

Referring to FIG. 7, in operation 701, the aerosol-generating apparatus 10 according to an embodiment may detect the temperature of the heating element 300 or the quantity of external light transmitted to the inside of the aerosol-generating apparatus 10 by using the sensor 310.

For example, the sensor 310 may detect the temperature of the heating element 300 in real time by using the measurement unit (e.g., the measurement unit 311 of FIG. 6) which contacts at least a portion of the heating element 300, and the electronic circuit (e.g., the electronic circuit 312 of FIG. 6) including a fixed resistor. Alternatively, the sensor 310 may detect the temperature of the heating element 300 by using a temperature sensor.

As another example, the sensor 310 may use the light-quantity measurement sensor to detect the quantity of external light that is transmitted to the inside of the aerosol-generating apparatus 10. For example, the light-quantity measurement sensor may measure the quantity of light incident on the at least one light-transmitting window 110 or the quantity of light incident on the heating element 300.

In operation 702, the processor 410 of the aerosol-generating apparatus 10 according to an embodiment may control the operation of the light source 200, based on the temperature of the heating element 300 or the quantity of external light detected in operation 701.

In an embodiment, the processor 410 may compare the temperature of the heating element 300, which is detected in operation 701, with a designated temperature profile. When a temperature of the heating element 300 is lower than a designated temperature of the designated temperature profile at a certain time, the processor 410 may adjust or supplement the quantity of light is received by the heating element 300 by controlling the light source 200 to turn on or increase the quantity of light emitted therefrom, such that the temperature of the heating element 300 increases to the designated temperature.

In operation 702, for example, the processor 410 may calculate a difference between the designated temperature of the designated temperature profile and the detected temperature of the heating element 300 and may control the operation of the light source 200 to increase the temperature of the heating element 300 by the calculated difference.

In another example, the processor 410 may compare a designated light profile with the quantity of external light detected in operation 701. If a quantity of external light detected is less than the designated quantity of the designated light profile at a certain time, the processor 410 may adjust or supplement the quantity of light received by the heating element 300 by controlling the light source 200 to turn on or increase the quantity of light emitted therefrom.

In operation 702, for example, the processor 410 may calculate a difference between the designated quantity of the designated light profile and the detected quantity of external light and may control the operation of the light source 200 to increase the quantity of light received by the heating element 300 by the calculated difference.

That is, the aerosol-generating apparatus 10 according to an embodiment may optimally maintain the temperature of the heating element 300 by performing operations 701 and 702 regardless of a change in surrounding environments (e.g., weather), and thus a uniform smoking sensation may be provided to the user.

Also, because the aerosol-generating apparatus 10 according to an embodiment may increase the temperature of the heating element 300 by using both the external light and the light from the light source 200 arranged inside the aerosol-generating apparatus 10, the aerosol-generating apparatus 10 may supply an aerosol to the user with less power than when using the light source 200 alone.

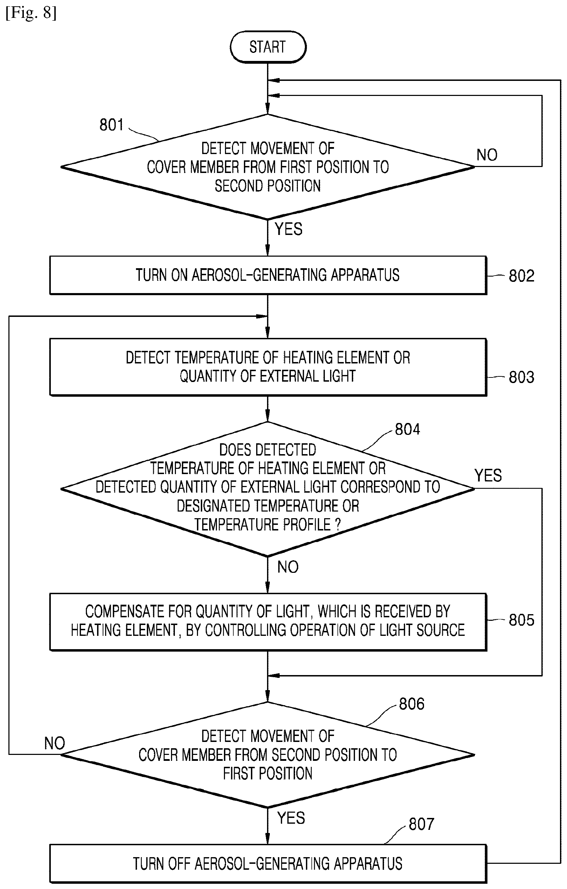

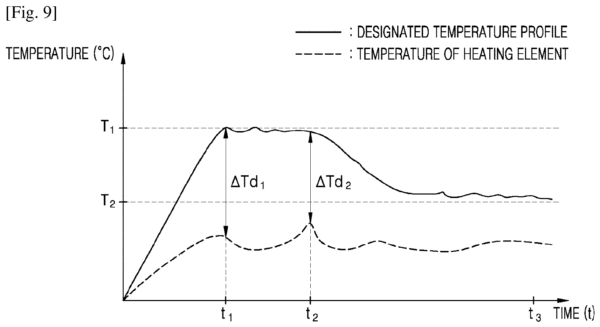

Hereinafter, an operation of adjusting or supplementing the quantity of light received by the heating element 300 of the aerosol-generating apparatus 10 is described in more detail with reference to FIGS. 8 and 9.

FIG. 8 is a flowchart for explaining operations of controlling an aerosol-generating apparatus, according to an embodiment. FIG. 9 is a graph showing an operation of compensating for the lack of light received by a heating element of an aerosol-generating apparatus, according to an embodiment.

FIG. 8 illustrates an operation of controlling the aerosol-generating apparatus 10 of FIGS. 1, 2, 3A, 3B and/or 5, and hereinafter, operations of controlling the aerosol-generating apparatus by referring to the components of the aerosol-generating apparatus 10 of FIGS. 1, 2, 3A, 3B and/or 5.

Referring to FIG. 8, in operation 801, the aerosol-generating apparatus 10 according to an embodiment may detect whether the cover member 120 moves from the first position (e.g., the first position P1 of FIG. 2) to the second position (e.g., the second position P2 of FIG. 2). For example, the aerosol-generating apparatus 10 may detect the movement of the cover member 120 from the first position to the second position by using the movement detection sensor 121.

When the cover member 120 is at the first position with respect to the housing 100, at least one light-transmitting window 110 that transmits the external light to the inside of the housing 100 may be covered by the cover member 120. As a result, the external light may not be provided to the heating element 300 because of the cover member 120.

On the contrary, when the cover member 120 is at the second position with respect to the housing 100, the at least one light-transmitting window 110 may be exposed to the outside of the aerosol-generating apparatus 10. As a result, the external light may be incident on the heating element 300 through the at least one light-transmitting window 110, and the temperature of the heating element 300 may increase.

In operation 802, if the movement of the cover member 120 from the first position to the second position is detected in operation 801, the processor 410 of the aerosol-generating apparatus 10 may control the aerosol-generating apparatus 10 to turn on.

On the contrary, in operation 801, when it is determined that the cover member 120 is at the first position because no movement of the cover member 120 from the first position to the second position is detected, the processor 410 may determine that the heating of the aerosol-generating material is not yet prepared and may perform operation 801 again.

In operation 803, the aerosol-generating apparatus 10 according to an embodiment may use the sensor 310 to detect the temperature of the heating element 300 or the quantity of external light that is incident on the inside of the aerosol-generating apparatus 10 through the at least one light-transmitting window 110.

For example, the sensor 310 may detect the temperature of the heating element 300 in real time by using the measurement unit (e.g., the measurement unit 311 of FIG. 6) which contacts at least some portions of the heating element 300, and the electronic circuit (e.g., the electronic circuit 312 of FIG. 6) including the fixed resistor. Alternatively, the sensor 310 may detect the temperature of the heating element 300 by using the temperature sensor.

As another example, the sensor 310 may use the light-quantity measurement sensor to detect the quantity of external light that is incident on the heating element 300 inside the aerosol-generating apparatus 10.

In operation 804, the aerosol-generating apparatus 10 according to an embodiment may determine whether the temperature of the heating element 300, which is detected in operation 803, corresponds to the designated temperature profile. As another example, the aerosol-generating apparatus 10 may determine whether the quantity of external light, which is incident on the heating element 300 as detected in operation 803, corresponds to the designated light profile.

For example, the processor 410 of the aerosol-generating apparatus 10 may determine whether the detected temperature of the heating element 300 corresponds to the designated temperature of the temperature profile which is stored in the memory 420. As another example, the processor 410 may determine whether the detected quantity of external light corresponds to the designated quantity of the light profile which is stored in the memory 420.

The designated temperature profile and the light profile stored in the memory 420 may respectively include information about an optimal temperature and information about optimal light quantity which secure the sufficient atomization amount and increase the aerosol-generating efficiency., In operation 804, the processor 410 may determine whether the temperature of the heating element 300 at a certain time is appropriate to improve the aerosol-generating efficiency or increase the atomization amount.

In operation 804, when it is determined that the detected temperature of the heating element 300 does not correspond to the designated temperature and/or that the detected quantity of external light incident on the heating element 300 does not correspond to the light profile, the processor 410 may compensate for the lack of light received by the heating element 300 by controlling the operation of the light source 200.

The processor 410 may compensate for the lack of light received by the heating element 300 by, for example, turning on the light source 200 or increasing the quantity of light from the light source 200. As a result, the aerosol-generating apparatus 10 may maintain the optimal temperature of the heating element 300 despite a decrease in the quantity of external light incident on the heating element 300.

In an embodiment, when the temperature of the heating element 300 detected at a certain time is lower than the temperature of the designated temperature profile which is set for the corresponding time, the processor 410 may compensate for the lack of light received by the heating element 300 by increasing the quantity of light emitted from the light source 200.

Referring to FIG. 9, temperature profile data stored in the memory 420 indicates that the temperature of the heating element 300 increases to reach the first temperature T1 at a first time t1, the first temperature T1 is maintained until a second time t2, and then the temperature decreases to reach a second temperature T2 at a third time t3.

In this case, the first time t1 may be about 32 seconds, time interval between the first time t1 and the second time t2 may be about 20 seconds, and time interval between the second time t2 and the third time t3 may be about 220 seconds, but embodiments are not limited thereto. Also, the first temperature T1 may be about 285 °C, and the second temperature T2 may be about 240 °C, but embodiments are not limited thereto.

In an embodiment, when the temperature of the heating element 300 detected during the first time t1 is lower than the temperature (e.g., the first temperature T1) of the temperature profile designated for the first time t1 by a first value βTd1, the processor 410 may control the operation of the light source 200 to allow the temperature of the heating element 300 to increase by the first value βTd1 and reach the designated temperature of the temperature profile.

For example, the processor 410 may calculate a difference between the designated temperature and the detected temperature of the heating element 300 at the first time t1, and may control the operation of the light source 200 to raise the temperature of the heating element 300 by the first value βTd1 that is the calculated difference.

In another embodiment, when the temperature of the heating element 300 detected at the second time t2 is lower than the temperature (e.g., the first temperature T1) of the temperature profile designated for the second time t2 by a second value βTd2, the processor 410 may control the operation of the light source 200 to raise the temperature of the heating element 300 by the second value βTd2 so that the temperature of the heating element 300 reaches the designated temperature.

For example, the processor 410 may calculate a difference between the designated temperature and the detected temperature of the heating element 300 at the second time t2, and may control the operation of the light source 200 to raise the temperature of the heating element 300 by the second value βTd2 that is the calculated difference. The processor 410 may control the light source 200 to increase the quantity of light as the difference between the designated temperature of the temperature profile and the detected temperature of the heating element 300 increases.

For example, when the difference βTd1 between the designated temperature of the temperature profile and the temperature of the heating element 300 at the first time t1 is greater than the difference βTd2 between the designated temperature of the temperature profile and the temperature of the heating element 300 at the second time t2, the processor 410 may control the operation of the light source 200 such that the quantity of light emitted from the light source 200 is greater at the first time t1 than at the second time t2.

In another embodiment, similarly, the processor 410 may calculate a difference between the designated light quantity of the light profile and the detected quantity of external light (e.g., external light incident on the heating element 300 or external light incident on at least one light-transmitting window 110) and may control the operation of the light source 200 to increase the quantity of light received by the heating element 300 by the calculated difference. Repeated descriptions are omitted hereinafter.

In operation 806, the aerosol-generating apparatus 10 according to an embodiment may detect whether the cover member 120 moves from the second position to the first position. For example, the aerosol-generating apparatus 10 may detect a sliding movement of the cover member 120 by using the movement detection sensor 121.

When the movement of the cover member 120 from the second position to the first position is detected in operation 806, the processor 410 may control the aerosol-generating apparatus 10 to be turned off in operation 807.

For example, when the cover member 120 is at the first position, the at least one light-transmitting window 110 is covered by the cover member 120, and the external light may not reach the inside of the aerosol-generating apparatus 10 or the heating element 300. The processor 410 may determine that it is unnecessary to operate the aerosol-generating apparatus 10 and may control the aerosol-generating apparatus 10 to be turned off.

On the contrary, if the movement of the cover member 120 to the first position is not detected in operation 806, the external light may be continuously transmitted to the heating element 300 through the at least one light-transmitting window 110, and thus the processor 410 may repeatedly perform operations 803 to 805.

Because the aerosol-generating apparatus 10 according to an embodiment controls the power of the aerosol-generating apparatus 10 based on the movement of the cover member 120 by performing operations 801 and 802 or operations 806 and 807 described above, unnecessary power consumption may be prevented, and user convenience may be improved.

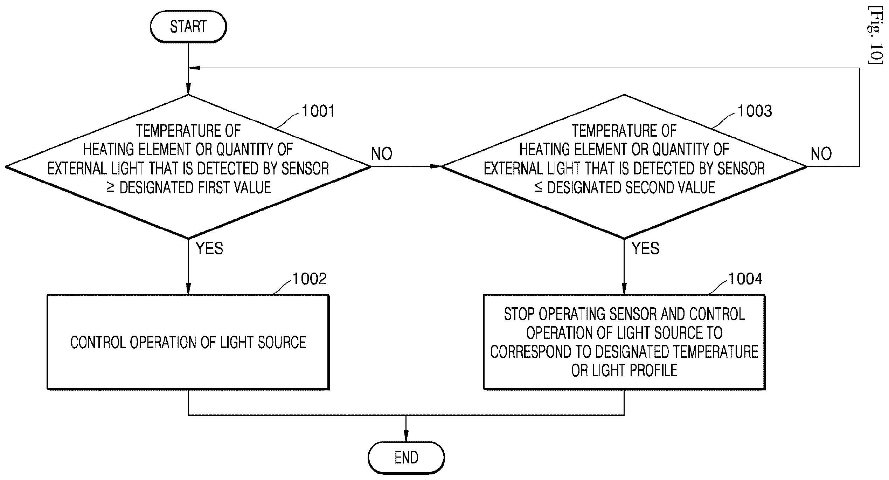

FIG. 10 is a flowchart for explaining operations of controlling an aerosol-generating apparatus, according to another embodiment.

FIG. 10 illustrates an operation of controlling the aerosol-generating apparatus 10 of FIGS. 1, 2, 3A, 3B and/or 5, and hereinafter, operations of controlling the aerosol-generating apparatus by referring to the components of the aerosol-generating apparatus 10 of FIGS. 1, 2, 3A, 3B and/or 5.

Because the aerosol-generating apparatus 10 according to an embodiment controls the operation of the light source 200 and/or the sensor 310 based on the temperature of the heating element 300 and/or the quantity of external light transmitted from the outside of the aerosol-generating apparatus 10 to the inside thereof, unnecessary power consumption may be prevented, and an operation speed may increase.

Referring to FIG. 10, in operation 1001, the processor 410 of the aerosol-generating apparatus 10 according to an embodiment may determine whether the temperature of the heating element 300 or the quantity of external light transmitted to the heating element 300 from the outside of the aerosol-generating apparatus 10, which is detected by the sensor 310, is equal to or greater than a first value designated in the temperature profile or the light profile.

In operation 1001, when the temperature of the heating element 300 is equal to or greater than the designated first value, or when the quantity of external light incident on the heating element 300 is equal to or greater than the designated first value, the processor 410 may control the light source 200 to stop operating.

When the temperature of the heating element 300 is equal to or greater than the designated temperature or when the quantity of external light incident to the heating element 300 is equal to or greater than the designated quantity of light, the temperature of the heating element 300 may increase to the desired temperature such that the aerosol-generating material may be heated by the external light alone without the operation of the light source 200. Accordingly, when the temperature of the heating element 300 or the quantity of external light that is incident on the heating element 300 is equal to or greater than the designated first value, in operation 1002, the processor 410 may stop operation of the light source 200 to prevent unnecessary power consumption.

Here, the term "designated first value" may indicate a value corresponding to the temperature of the heating element 300 or the quantity of external light at which more than a designated quantity of aerosols may be generated by using the external light without the light source 200. The first value may change according to the user's setting.

On the contrary, in operation 1001, when it is determined that the temperature of the heating element 300 or the quantity of external light that is incident on the heating element 300 is smaller than a designated first value, the processor 410 may determine whether an initial temperature of the heating element 300 or the initial quantity of external light that is incident on the heating element 300 is equal to or less than the designated second value in operation 1003.

In the present specification, the expression "initial temperature of the heating element" may indicate a temperature of the heating element 300 when a designated period of time (e.g., about 5 seconds to about 10 seconds) has passed after the aerosol-generating apparatus 10 starts operating.

Also, in the present specification, the expression "initial quantity of external light" may indicate a quantity of external light that is incident on the heating element 300 from the outside of the aerosol-generating apparatus 10 when the designated period of time (e.g., about 5 seconds to about 10 seconds) has passed after the aerosol-generating apparatus 10 starts operating.

In the drawings, the embodiment in which the aerosol-generating apparatus 10 performs operation 1001 and then operation 1003 is illustrated. However, according to an embodiment, operations 1001 and 1003 may be simultaneously performed, or operation 1003 may be performed before operation 1001.

When it is determined in operation 1003 that the initial temperature of the heating element 300 or the initial quantity of external light that is incident on the heating element 300 is less than the designated second value, the processor 410 may stop operation of the sensor 310 and may control the operation of the light source 200 to make the temperature of the heating element 300 correspond to the designated temperature profile or make the quantity of light incident on the heating element 300 correspond to the designated light profile in operation 1004.

If the temperature of the heating element 300 fails to increase sufficiently by the external light or if the quantity of external light that is incident on the heating element 300 is not sufficient, in operation 1004, the processor 410 may stop measuring the temperature of the heating element 300 or the quantity of external light that is incident on the heating element 300. Also, the processor 410 may operate the light source 200 arranged inside the aerosol-generating apparatus 10, so that the temperature of the heating element 300 corresponds to the designated temperature profile or so that the quantity of light incident on the heating element 300 corresponds to the designated light profile.

The aerosol-generating apparatus 10 may stop operating the sensor 310 and heat the aerosol-generating material by increasing the temperature of the heating element 300 by using the light source 200. Thus, unnecessary power consumption may be reduced, and the operation speed of the processor 410 may be improved. As a result, the aerosol-generating apparatus 10 may decrease a smoking waiting time of the user and may increase the battery life of the aerosol-generating apparatus 10.

Described above embodiments may also be implemented in the form of a recording medium including instructions executable by a computer, such as a program module executable by the computer. The computer-readable recording medium may be any available medium that can be accessed by a computer, including both volatile and nonvolatile media, and both removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

Those of ordinary skill in the art related to the present embodiments may understand that various changes in form and details can be made therein without departing from the scope of the characteristics described above. Therefore, the disclosed methods should be considered in a descriptive point of view, not a restrictive point of view. The scope of the present disclosure is defined by the appended claims rather than by the foregoing description, and all differences within the scope of equivalents thereof should be construed as being included in the present disclosure.

## Claims

1. An aerosol-generating apparatus (10) comprising:
a housing (100) comprising at least one light-transmitting window (110) configured to transmit external light to an inside of the aerosol-generating apparatus (10);
a heating element (300) comprising a plurality of nanoparticles configured to generate heat in response to light through Surface Plasmon Resonance (SPR);
a light source (200) arranged inside the housing (100) and configured to emit light toward the heating element (300);
a sensor (121) configured to detect a quantity of the external light transmitted to the inside of the aerosol-generating apparatus (10) through the at least one light-transmitting window (110) ; and
a processor (410) configured to adjust a quantity of light received by the heating element (300) by controlling the light source (200) based on the detected quantity of the external light transmitted to the inside of the aerosol-generating apparatus (10).

2. The aerosol-generating apparatus (10) of claim 1, wherein the housing (100) further comprises a discharge path (100e) through which an aerosol is discharged out of the aerosol-generating apparatus (10).

3. The aerosol-generating apparatus (10) of claim 2, wherein
the aerosol is generated from an aerosol-generating material (20) contained inside the heating element (300), and
a mesh portion (300m) is arranged in the heating element (300) such that the aerosol is discharged from an inside of the heating element (300) to the discharge path (100e) through the mesh portion (300m).

4. The aerosol-generating apparatus (10) of claim 1, wherein the sensor (121) further comprises a temperature sensor configured to detect the temperature of the heating element (300).

5. The aerosol-generating apparatus (10) of claim 4, wherein the processor (410) is configured to:
calculate a difference between a temperature of a designated temperature profile and the detected temperature of the heating element (300); and
control the light source (200) to increase the temperature of the heating element (300) by the calculated difference.

6. The aerosol-generating apparatus (10) of claim 4, wherein the processor (410) is configured to stop operation of the light source (200) when the detected temperature of the heating element (300) is equal to or higher than a designated first temperature.

7. The aerosol-generating apparatus (10) of claim 4, wherein the processor (410) is configured to stop operation of the sensor (121) and control the light source (200) to make the temperature of the heating element (300) correspond to a designated temperature profile, when an initial temperature of the heating element (300), detected by the sensor (121), is equal to or lower than a designated second temperature.

8. The aerosol-generating apparatus (10) of claim 1, further comprising a cover member (120) coupled to the housing (100) such that the cover member (120) is movable in a lengthwise direction of the housing (100) between a first position (P1) and a second position (P2),
wherein the at least one light-transmitting window (110) is covered by the cover member (120) when the cover member (120) is at the first position (P1), and the at least one light-transmitting window (110) is exposed to the outside of the aerosol-generating apparatus (10) when the cover member (120) is at the second position (P2).

9. The aerosol-generating apparatus (10) of claim 8, further comprising a movement detection sensor (121) configured to detect movement of the cover member (120),
wherein the processor (410) is configured to:
turn on the aerosol-generating apparatus (10) when movement of the cover member (120) from the first position (P1) to the second position (P2) is detected; and
turn off the aerosol-generating apparatus (10) when movement of the cover member (120) from the second position (P2) to the first position (P1) is detected.

10. The aerosol-generating apparatus (10) of claim 1, wherein the sensor (121) comprises a light-quantity measurement sensor configured to detect a quantity of the external light transmitted from the outside of the aerosol-generating apparatus (10) to the inside of the aerosol-generating apparatus (10) through the at least one light-transmitting window (110).

11. The aerosol-generating apparatus (10) of claim 10, wherein the processor (410) is configured to:
calculate a difference between a quantity of light of a designated light profile and the detected quantity of the external light transmitted to the inside of the aerosol-generating apparatus (10); and
control the light source (200) to increase, by the calculated difference, the quantity of light received by the heating element (300).

12. A method of controlling an aerosol-generating apparatus (10), the method comprising:
detecting a quantity of external light transmitted to an inside of the aerosol-generating apparatus (10), wherein a heating element (300) is configured to generate heat in response to light through Surface Plasmon Resonance (SPR); and
supplementing a quantity of light received by the heating element (300), by controlling a light source (200) arranged inside the aerosol-generating apparatus (10) based on the detected quantity of the external light.

13. The method of claim 12, wherein the supplementing comprises:
calculating a difference between a temperature of a designated temperature profile and the detected temperature of the heating element (300); and
controlling the light source (200) to increase the temperature of the heating element (300) by the calculated difference.

14. The method of claim 12, wherein the supplementing comprises:
calculating a difference between a quantity of light of a designated light profile and the detected quantity of the external light; and
controlling the light source to increase, by the calculated difference, the quantity of light received by the heating element.

15. A non-transitory computer-readable recording medium having recorded thereon a program which, when executed by an apparatus according to claim 1, causes the apparatus to carry out the steps of the method of claim 12.

## Patentansprüche

1. Aerosolerzeugungsvorrichtung (10), die Folgendes umfasst:
ein Gehäuse (100), das mindestens ein lichtdurchlässiges Fenster (110) umfasst, das konfiguriert ist, externes Licht zu einem Innenraum der Aerosolerzeugungsvorrichtung (10) weiterzuleiten;
ein Heizelement (300), das mehrere Nanopartikel umfasst, die konfiguriert sind, Wärme in Reaktion auf Licht durch Oberflächenplasmonenresonanz (SPR) zu erzeugen;
eine Lichtquelle (200), die im Gehäuse (100) angeordnet ist und konfiguriert ist, Licht zum Heizelement (300) abzustrahlen;
einen Sensor (121), der konfiguriert ist, eine Menge des externen Lichts zu detektieren, das zum Innenraum der Aerosolerzeugungsvorrichtung (10) durch das mindestens eine lichtdurchlässige Fenster (110) weitergeleitet wird; und
einen Prozessor (410), der konfiguriert ist, eine Menge von Licht, das durch das Heizelement (300) empfangen wird, durch Steuern der Lichtquelle (200) auf der Grundlage der detektierten Menge des externen Lichts, das zum Innenraum der Aerosolerzeugungsvorrichtung (10) weitergeleitet wird, anzupassen.

2. Aerosolerzeugungsvorrichtung (10) nach Anspruch 1, wobei das Gehäuse (100) ferner einen Abgabepfad (100e) umfasst, durch den ein Aerosol aus der Aerosolerzeugungsvorrichtung (10) abgegeben wird.

3. Aerosolerzeugungsvorrichtung (10) nach Anspruch 2, wobei
das Aerosol von einem Aerosolerzeugungsmaterial (20) erzeugt wird, das im Heizelement (300) enthalten ist, und
ein Gitterabschnitt (300m) im Heizelement (300) angeordnet ist, derart, dass das Aerosol aus einem Innenraum des Heizelements (300) zum Abgabepfad (100e) durch den Gitterabschnitt (300m) abgegeben wird.

4. Aerosolerzeugungsvorrichtung (10) nach Anspruch 1, wobei der Sensor (121) ferner einen Temperatursensor umfasst, der konfiguriert ist, die Temperatur des Heizelements (300) zu detektieren.

5. Aerosolerzeugungsvorrichtung (10) nach Anspruch 4, wobei der Prozessor (410) konfiguriert ist zum:
Berechnen einer Differenz zwischen einer Temperatur eines festgelegten Temperaturprofils und der detektierten Temperatur des Heizelements (300) und
Steuern der Lichtquelle (200), um die Temperatur des Heizelements (300) um die berechnete Differenz zu erhöhen.

6. Aerosolerzeugungsvorrichtung (10) nach Anspruch 4, wobei der Prozessor (410) konfiguriert ist, den Betrieb der Lichtquelle (200) zu stoppen, wenn die detektierte Temperatur des Heizelements (300) gleich oder größer als eine festgelegte erste Temperatur ist.

7. Aerosolerzeugungsvorrichtung (10) nach Anspruch 4, wobei der Prozessor (410) konfiguriert ist, den Betrieb des Sensors (121) zu stoppen und die Lichtquelle (200) zu steuern, um die Temperatur des Heizelements (300) einem festgelegten Temperaturprofil entsprechend zu gestalten, wenn eine anfängliche Temperatur des Heizelements (300), die durch den Sensor (121) detektiert wird, gleich oder kleiner als eine festgelegte zweite Temperatur ist.

8. Aerosolerzeugungsvorrichtung (10) nach Anspruch 1, die ferner ein Abdeckelement (120) umfasst, das an das Gehäuse (100) derart gekoppelt ist, dass das Abdeckelement (120) in einer Längsrichtung des Gehäuses (100) zwischen einer ersten Stellung (P1) und einer zweiten Stellung (P2) beweglich ist,
wobei das mindestens eine lichtdurchlässige Fenster (110) durch das Abdeckelement (120) abgedeckt ist, wenn das Abdeckelement (120) in der ersten Stellung (P1) ist, und das mindestens eine lichtdurchlässige Fenster (110) zur Außenseite der Aerosolerzeugungsvorrichtung (10) freigelegt ist, wenn das Abdeckelement (120) in der zweiten Stellung (P2) ist.

9. Aerosolerzeugungsvorrichtung (10) nach Anspruch 8, die ferner einen Bewegungsdetektionssensor (121) umfasst, der konfiguriert ist, eine Bewegung des Abdeckelements (120) zu detektieren,
wobei der Prozessor (410) konfiguriert ist zum:
Einschalten der Aerosolerzeugungsvorrichtung (10), wenn eine Bewegung des Abdeckelements (120) von der ersten Stellung (P1) zur zweiten Stellung (P2) detektiert wird; und
Ausschalten der Aerosolerzeugungsvorrichtung (10), wenn eine Bewegung des Abdeckelements (120) von der zweiten Stellung (P2) zur ersten Stellung (P1) detektiert wird.

10. Aerosolerzeugungsvorrichtung (10) nach Anspruch 1, wobei der Sensor (121) einen Lichtmengenmesssensor umfasst, der konfiguriert ist, eine Menge des externen Lichts zu detektieren, das von der Außenseite der Aerosolerzeugungsvorrichtung (10) zum Innenraum der Aerosolerzeugungsvorrichtung (10) durch das mindestens eine lichtdurchlässige Fenster (110) weitergeleitet wird.

11. Aerosolerzeugungsvorrichtung (10) nach Anspruch 10, wobei der Prozessor (410) konfiguriert ist zum:
Berechnen einer Differenz zwischen einer Menge von Licht eines festgelegten Lichtprofils und der detektierten Menge des externen Lichts, das zum Innenraum der Aerosolerzeugungsvorrichtung (10) weitergeleitet wird; und
Steuern der Lichtquelle (200), die Menge von Licht, die durch das Heizelement (300) empfangen wird, um die berechnete Differenz zu erhöhen.

12. Verfahren zum Steuern einer Aerosolerzeugungsvorrichtung (10), wobei das Verfahren Folgendes umfasst:
Detektieren einer Menge von externem Licht, das zu einem Innenraum der Aerosolerzeugungsvorrichtung (10) weitergeleitet wird, wobei ein Heizelement (300) konfiguriert ist, Wärme in Reaktion auf Licht durch Oberflächenplasmonenresonanz (SPR) zu erzeugen; und
Ergänzen einer Menge von Licht, die durch das Heizelement (300) empfangen wird, durch Steuern einer Lichtquelle (200), die in der Aerosolerzeugungsvorrichtung (10) angeordnet ist, auf der Grundlage der detektierten Menge des externen Lichts.

13. Verfahren nach Anspruch 12, wobei das Ergänzen Folgendes umfasst:
Berechnen einer Differenz zwischen einer Temperatur eines festgelegten Temperaturprofils und der detektierten Temperatur des Heizelements (300) und
Steuern der Lichtquelle (200), die Temperatur des Heizelements (300) um die berechnete Differenz zu erhöhen.

14. Verfahren nach Anspruch 12, wobei das Ergänzen Folgendes umfasst:
Berechnen einer Differenz zwischen einer Menge des Lichts eines festgelegten Lichtprofils und der detektierten Menge des externen Lichts und
Steuern der Lichtquelle, die Menge von Licht, die durch das Heizelement empfangen wird, um die berechnete Differenz zu erhöhen.

15. Nicht transitorisches computerlesbares Aufzeichnungsmedium, in dem ein Programm aufgezeichnet ist, das, wenn es durch eine Vorrichtung nach Anspruch 1 ausgeführt wird, verursacht, dass die Vorrichtung die Schritte des Verfahrens nach Anspruch 12 ausführt.

## Revendications

1. Appareil de production d'aérosol (10) comportant :
un boîtier (100) comportant au moins une fenêtre de transmission de lumière (110) configurée pour transmettre de la lumière externe à un intérieur de l'appareil de production d'aérosol (10) ;
un élément chauffant (300) comportant une pluralité de nanoparticules configurées pour générer de la chaleur en réponse à la lumière par résonance des plasmons de surface (SPR) ;
une source de lumière (200) agencée à l'intérieur du boîtier (100) et configurée pour émettre de la lumière vers l'élément chauffant (300) ;
un capteur (121) configuré pour détecter une quantité de la lumière externe transmise à l'intérieur de l'appareil de production d'aérosol (10) à travers la au moins une fenêtre de transmission de lumière (110) ; et
un processeur (410) configuré pour régler une quantité de lumière reçue par l'élément chauffant (300) en commandant la source de lumière (200) sur la base de la quantité détectée de la lumière externe transmise à l'intérieur de l'appareil de production d'aérosol (10).

2. Appareil de production d'aérosol (10) selon la revendication 1, dans lequel le boîtier (100) comporte en outre un trajet d'évacuation (100e) par lequel un aérosol est évacué hors de l'appareil de production d'aérosol (10).

3. Appareil de production d'aérosol (10) selon la revendication 2, dans lequel
l'aérosol est produit à partir d'une matière de production d'aérosol (20) contenue à l'intérieur de l'élément chauffant (300), et
une partie à mailles (300m) est agencée dans l'élément chauffant (300) de telle sorte que l'aérosol est évacué d'un intérieur de l'élément chauffant (300) vers le trajet d'évacuation (100e) à travers la partie à mailles (300m).

4. Appareil de production d'aérosol (10) selon la revendication 1, dans lequel le capteur (121) comporte en outre un capteur de température configuré pour détecter la température de l'élément chauffant (300).

5. Appareil de production d'aérosol (10) selon la revendication 4, dans lequel le processeur (410) est configuré pour :
calculer une différence entre une température d'un profil de température désigné et la température détectée de l'élément chauffant (300) ; et
commander à la source de lumière (200) d'augmenter la température de l'élément chauffant (300) de la différence calculée.

6. Appareil de production d'aérosol (10) selon la revendication 4, dans lequel le processeur (410) est configuré pour arrêter un fonctionnement de la source de lumière (200) lorsque la température détectée de l'élément chauffant (300) est égale ou supérieure à une première température désignée.

7. Appareil de production d'aérosol (10) selon la revendication 4, dans lequel le processeur (410) est configuré pour arrêter un fonctionnement du capteur (121) et commander à la source de lumière (200) de faire correspondre la température de l'élément chauffant (300) à un profil de température désigné, lorsqu'une température initiale de l'élément chauffant (300), détectée par le capteur (121), est égale ou inférieure à une seconde température désignée.

8. Appareil de production d'aérosol (10) selon la revendication 1, comportant en outre un élément de couvercle (120) couplé au boîtier (100) de telle sorte que l'élément de couvercle (120) est mobile dans une direction longitudinale du boîtier (100) entre une première position (P1) et une seconde position (P2),
dans lequel la au moins une fenêtre de transmission de lumière (110) est recouverte par l'élément de couvercle (120) lorsque l'élément de couvercle (120) est à la première position (P1), et la au moins une fenêtre de transmission de lumière (110) est exposée à l'extérieur de l'appareil de production d'aérosol (10) lorsque l'élément de couvercle (120) est à la seconde position (P2).

9. Appareil de production d'aérosol (10) selon la revendication 8, comportant en outre un capteur de détection de mouvement (121) configuré pour détecter un mouvement de l'élément de couvercle (120),
dans lequel le processeur (410) est configuré pour :
mettre en marche l'appareil de production d'aérosol (10) lorsqu'un mouvement de l'élément de couvercle (120) de la première position (P1) à la seconde position (P2) est détecté ; et
arrêter l'appareil de production d'aérosol (10) lorsqu'un mouvement de l'élément couvercle (120) de la seconde position (P2) à la première position (P1) est détecté.

10. Appareil de production d'aérosol (10) selon la revendication 1, dans lequel le capteur (121) comporte un capteur de mesure de quantité de lumière configuré pour détecter une quantité de la lumière externe transmise depuis l'extérieur de l'appareil de production d'aérosol (10) à l'intérieur de l'appareil de production d'aérosol (10) à travers la au moins une fenêtre de transmission de lumière (110).

11. Appareil de production d'aérosol (10) selon la revendication 10, dans lequel le processeur (410) est configuré pour :
calculer une différence entre une quantité de lumière d'un profil de lumière désigné et la quantité détectée de la lumière externe transmise à l'intérieur de l'appareil de production d'aérosol (10) ; et
commander à la source de lumière (200) d'augmenter, de la différence calculée, la quantité de lumière reçue par l'élément chauffant (300).

12. Procédé de commande d'un appareil de production d'aérosol (10), le procédé comportant de :
détecter une quantité de lumière externe transmise à un intérieur de l'appareil de production d'aérosol (10), dans lequel un élément chauffant (300) est configuré pour générer de la chaleur en réponse à la lumière par résonance des plasmons de surface (SPR) ; et
compléter une quantité de lumière reçue par l'élément chauffant (300), en commandant une source de lumière (200) agencée à l'intérieur de l'appareil de production d'aérosol (10) sur la base de la quantité détectée de la lumière externe.

13. Procédé selon la revendication 12, dans lequel le complément comporte de :
calculer une différence entre une température d'un profil de température désigné et la température détectée de l'élément chauffant (300) ; et
commander à la source de lumière (200) d'augmenter la température de l'élément chauffant (300) de la différence calculée.

14. Procédé selon la revendication 12, dans lequel le complément comporte de :
calculer une différence entre une quantité de lumière d'un profil de lumière désigné et la quantité détectée de la lumière externe ; et
commander à la source de lumière d'augmenter, de la différence calculée, la quantité de lumière reçue par l'élément chauffant.

15. Support d'enregistrement non transitoire lisible par ordinateur sur lequel est enregistré un programme qui, lorsqu'il est exécuté par un appareil selon la revendication 1, amène l'appareil à mettre en œuvre les étapes du procédé de la revendication 12.
